# EUROPEAN PATENT APPLICATION

(11) **EP 2 958 246 A1**
(43) Date of publication of application: **23.12.2015**
(21) Application number: 15172284.0
(22) Date of filing: 16.06.2015
(51) Int. Cl.: H04B 3/54

(54) **COMMUNICATION DEVICE USING POWER LINE FOR VEHICLE TO INFRASTRUCTURE COMMUNICATION AND METHOD OF OPERATING THE SAME**

(30) Priority: 16.06.2014 KR 20140073154
(71) Applicant: LSIS Co., Ltd., Anyang-si, Gyeonggi-do 431-848 (KR)
(72) Inventor: YU, Young Gyu, 431-848 Anyang-si, Gyeonggi-do (KR)
(74) Representative: Lang, Johannes

(57) **Abstract**

A power line communication device of an electric vehicle (EV) coupled to electric vehicle service equipment (EVSE) through a power line is provided. The power line communication device includes a noise measurement unit for applying a first voltage signal to the EVSE through the power line, receiving a second voltage signal output from the EVSE in response to the first voltage signal, and generating noise information comprising information on a result of comparison between the second voltage signal and the first voltage signal. The power line communication device includes a signal attenuation correction unit for receiving a plurality of power line signals from the EVSE and generating signal attenuation information based on the generated noise information and the plurality of power line signals. The power line communication device includes a communication modem for performing a communication exchange with the EVSE based on the generated signal attenuation information.

## Description

### BACKGROUND

The present disclosure relates to a communication device using a power line that has enhanced performance.

In vehicle industry, electric vehicles are being rapidly developed because of limitations in global warming due to environmental destruction and high oil prices, recently. Major vehicle makers all over the world are now researching and developing electric vehicles as major vehicles to be developed.

The electric vehicles have advantages in that they have no waste gas and little noise. Although the electric vehicles have been developed earlier than gasoline vehicles in 1873, they have not been commercialized due to limitations such as a considerable weight of a rechargeable battery or a time taken for charging but are again being developed due to recent serious pollution. However, due to a limitation in number of times the rechargeable battery is used, there is a limitation in that long distance driving is not ensured only with the rechargeable battery itself. Thus, hybrid vehicles that use two power sources such as fossil fuel and a rechargeable battery are actively being sold in the market especially in North America, now. Prius of Toyota, a Japanese vehicle maker is a typical hybrid vehicle. The Prius has a motor and an alternator that may use, as electrical energy, kinetic energy collected when an engine and vehicle using gasoline brake.

For the electric vehicle, a way of using a rechargeable battery (i.e., secondary battery) and a fuel battery having different characteristics from typical battery characteristics is being provided. Thus, typical limitations due to the charging of a rechargeable battery in the electric vehicle and the frequent replacement cycle thereof are being gradually solved. A certain small electric vehicle, not a general road-driving electric vehicle has been already commercialized and is being actively used. For example, the small electric vehicle is being actively used for a golf cart for a golf course, a vehicle for moving players and equipment in stadium, an indoor driving vehicle, an indoor cleaning vehicle and so on, and the fact that the electric vehicle will also proliferate for a general commercial vehicle and a car is predicted.

A rechargeable battery in the electric vehicle needs to be regularly charged. Since electric vehicle service equipment (EVSE) may transmit data simultaneously with supplying electricity by using a power line, it may be significantly useful for using the electric vehicle expected to be commercialized in the near future and a user may transmit various multimedia data necessary for a vehicle by using the power line.

EVSE typically presented uses a power line communication (PLC) technology to transmit a data signal received through the power line to a data processing device.

When an electric vehicle is commercialized, a rechargeable battery in the electric vehicle will be generally charged by using a commercial power outlet. For example, an electricity charging station similar to the current gas station will emerge, and drivers will charge the rechargeable battery of the electric vehicle by using a commercial power outlet in the electricity charging station. In this case, the commercial power outlet may be a general commercial power connection unit that is provided at home, a charging station dedicated to the electric vehicle, or a parking lot of a building. Generally, places where the commercial power outlet is installed are significantly unsuitable environments for data communication during the charging of the vehicle due to ambient noise or mechanical noise. For example, when a charging station is located at the same place as a car wash, the noise or vibration of a motor driven in order to wash a vehicle at the car wash is significantly unsuitable for reliable and effective data communication during the charging of the vehicle. Thus, in order to transmit a data signal effectively and reliably by using a power line during the charging of the vehicle, a communication technology should be applied which may overcomes high load interference, noise, signal distortion and so on.

ISO 15118 standard of a power line communication type has been adopted as a communication standard for the EV and electric vehicle service equipment (EVSE) and especially, power line communication is performed for control pilot line transmission (CPLT). An EV maker and an EVSE maker are developing a power line communication model suitable for the standard. However, the ISO 15118 standard is discussing PHY, MAC, NWK, and application technologies of the power line communication modem and there is no requirement for a power line channel. Thus, channel characteristics affecting the communication of the EVSE or EV vary according to a maker, which may lead to a decrease in reliability of power line communication.

However, a PLC technology applied to a typical EV charging device has a difficulty in transmitting data effectively and reliably in the environment as described above due to latent noise in a power line, high load interference, signal distortion and so on.

Also, for PLC technology, high output PLC amplification equipment needs to be installed at certain intervals because it is not easy to develop a core chip technology for solving transmission rate and distance limitations as well as communication quality due to latent noise in the power line, which imposes restrictions on communication distances (e.g., 5 miles). Thus, there is a limitation in that high initial costs are needed for building an infrastructure, which is becoming a pending issue on a technology development project in the future.

For the same reason as described earlier, a charging device for a vehicle using a typical PLC technology has limitations in that it is not easy for a user to remotely transmit data reliably and effectively to the vehicle and high costs are needed for solving the limitations as described above.

### SUMMARY

Embodiments provide electric vehicle service equipment (EVSE) that may estimate a channel in consideration of the channel characteristics of a power line channel before applying a signal to control pilot line transmission (CPLT), apply a power line signal based on the estimated data, overcome latent noise in a power line, high load interference, the distortion of a data signal and so on caused when transmitting a data signal by using a typical PLC technology during the charging of a vehicle, and transmit the data signal more effectively and reliably.

In one embodiment, a power line communication device of an electric vehicle (EV) coupled to electric vehicle service equipment (EVSE) through a power line includes a noise measurement unit for applying a first voltage signal to the EVSE through the power line, receiving a second voltage signal output from the EVSE in response to the first voltage signal, and generating noise information including information on a result of comparison between the second voltage signal and the first voltage signal; a signal attenuation correction unit for receiving a plurality of power line signals from the EVSE and generating signal attenuation information based on the generated noise information and the plurality of power line signals; and a communication modem for performing a communication exchange with the EVSE based on the generated signal attenuation information.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram of a power line communication device according to an embodiment.
Fig. 2 is a graph representing signal attenuation information according to an embodiment.
FIG. 3 is a flow chart of an operation method of a power line communication device according to an embodiment.
Fig. 4 is a schematic diagram of a power line communication device according to another embodiment.

### DETAILED DESCRIPTION OF THE EMBODIMENTS

Reference will now be made in detail to the embodiments of the present disclosure, examples of which are illustrated in the accompanying drawings.

Particular embodiments are described below in detail with reference to the accompanying drawings. However, it may not be said that the spirit of the present disclosure is limited to presented embodiments, and it is possible to easily propose, by the addition, change or deletion of components, other retrogressive inventions or other embodiments included within the scope of the inventive spirit.

When describing the present disclosure, detailed descriptions of related known technologies will be ruled out in order not to unnecessarily obscure subject matters of the present disclosure. Also, numbers (e.g., first and second) used in the process of describing the present disclosure are only identification numerals for distinguishing one component from another.

The terms used herein are general terms being currently, widely used if possible, but in particular cases, terms arbitrarily selected by the applicant are used and in these cases, since their meanings are described in detail in corresponding parts of the detailed description, it should be noted that an embodiment needs to be understood with the meanings of the terms, not with the names of the terms.

Also, when it is mentioned in the present disclosure that one component is "coupled to" or "connected to" another component, it would be understood that the component may be connected or connected directly to the other component but may also be coupled or connected through other components in between unless specifying on the contrary.

That is, in the following description, the word "including" does not exclude the presence of components or steps other than those enumerated.

Embodiments of the present disclosure are described below in more detail with reference to the accompanying drawings. In describing the present disclosure, the same reference numerals are used for the same means irrespective of Figures in order to help readers easily understand throughout the disclosure.

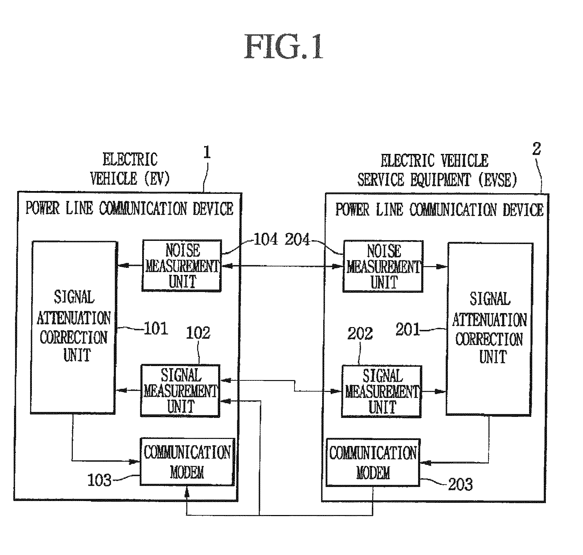

Fig. 1 is a circuit diagram representing a plurality of power line communication devices 1 and 2 included in an electric vehicle (EV) and electric vehicle service equipment (EVSE) and a power line between two devices.

As shown in Fig. 1, the EV and the EVSE are coupled by a power line.

The EV and the EVSE may communication through the power line.

A communication technology of ISO-15118, a standard protocol may be used when the EV and the EVSE communicate each other.

ISO-15118 is a communication standard for the EV and ISO-15118-3 defines the power line communication of an MAC layer and a PHY layer.

The power line communication device 1 may include a noise measurement unit 104, a signal measurement unit 102, a signal attenuation correction unit 101, and a communication modem 103.

The noise measurement unit 104 may be integrated with the signal attenuation correction unit 101 so that they are configured in a single module.

Since the power line communication device 1 in the EV has the same configuration as the power line communication device 20 in the EVSE and operates by the same operating method, only the operating method of the power line communication device 1 in the EV is described below and the operating method of the power line communication device 2 in the EVSE is omitted.

The noise measurement unit 104 may generate power line noise information that is information on noise in the power line.

An example of generating the power line noise information is described below.

The noise measurement unit 104 may apply a first voltage signal (e.g., a sinusoidal signal having a frequency of 1 Hz and a maximum voltage of 5 V) to the EVSE through the power line. After applying the first voltage signal, the noise measurement unit 104 may measure a second voltage signal that includes noise applied from the EVSE through the power line. The noise measurement unit 104 may compare the first voltage signal and the second voltage signal and obtain only a noise signal newly added to the second voltage signal from the first voltage signal.

That is, the noise signal may be defined as a third voltage signal = (second voltage signal - first voltage signal).

The power line noise information may include, in units of decibel (dB), information on the signal intensity of each frequency in a frequency domain on all noise signals obtained in this way.

After generating the power line noise information, the noise measurement unit 104 may store the generated power line noise information in a memory (not shown).

The communication modem 103 in the EV may transmit and receive a power line signal to and from the EVSE.

The communication modem 203 of the EVSE outputs a plurality of first power line signals to the signal measurement unit 102 of the EV, and when the plurality of first power line signals are output, the signal measurement unit 102 of the EV may receive a plurality of second power line signals that are generated by the attenuation of the plurality of first power line signals while the plurality of first power line signals are transmitted through the power line.

The communication modem 203 of the EVSE may output the plurality of first power line signals to the signal measurement unit 102 of the EV and transmit information on the plurality of first power line signals to the communication modem 103 of the EV.

As an example of the plurality of power line signals, there may be power line signals having the same amplitude and using different frequencies.

Information on the plurality of power line signals is described below in detail.

After receiving (or measuring) the plurality of power line signals that are signals attenuated while being output through the power line, the signal measurement unit 102 may transmit the plurality of second power line signals to the signal attenuation correction unit 101.

The communication modem 103 of the EV receives, from the EVSE, information on the plurality of first power line signals output from the communication modem 203 of the EVSE before the attenuation and the reception by the EV, and transmits information on the plurality of first power line signals to the signal attenuation correction unit 101.

Information on the first power line signal includes, in units of dB, information on each signal intensity of each frequency in a frequency domain for the plurality of first power line signals that are output from the communication modem 203 of the EVSE before the attenuation and the reception by the EV after the output from the communication modem 203 of the EVSE.

The signal attenuation correction unit 101 of the EV may generate information on the plurality of second power line signals, and information on the second power line signal may include, in units of dB, information on each signal intensity of each frequency in a frequency domain for the plurality of second power line signals received by the EV after the output and attenuation from the communication modem 203 of the EVSE.

The signal attenuation correction unit 101 may receive information on a plurality of first power line signals and generate information on signal attenuation based on power line noise information, information on the plurality of first power line signals and information on the plurality of second power line signals.

By generating signal attenuation information and performing a communication exchange based on the generated signal attenuation information, the power line communication device of the EV may secure reliability in the communication exchange between the EV and the EVSE and provide safety.

The signal attenuation information may be information on a size ratio of the plurality of first power line signals to the plurality of second power line signals.

That is, the signal attenuation information may be a graph representing, in a frequency domain, a ratio of the second power line signals received by the EV through a power line to the first power line signals output from the EVSE before the reception through the power line.

The signal attenuation information may be a value varying according to the state of a power line or the channel state of the power line, especially noise in the power line.

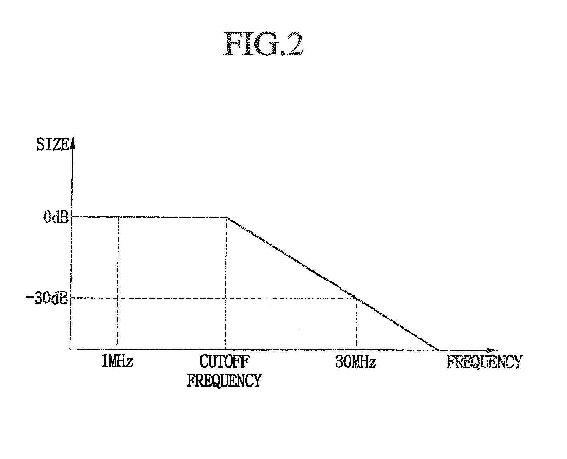

An example of the signal attenuation information is shown in Fig. 2.

Referring back to Fig. 1, the signal attenuation correction unit 101 may generate signal attenuation information and transmit the generated information to the communication modem 103 of the EV.

After receiving the signal attenuation information from the signal attenuation correction unit 101, the communication modem 103 of the EV may perform a communication exchange with the communication modem 203 of the EVSE based on the signal attenuation information.

In performing a communication exchange based on signal attenuation information, the communication modem 103 of the EV analyses the size ratio of a second power line signal to a first power line signal for each frequency of a power line signal included in the signal attenuation information, determines which frequency band may be used advantageously for communication exchange, and performs the communication exchange by using the frequency band advantageous to the communication exchange, as a result of determination.

An example of an operating method of the communication exchange may include, but has no limitation to, a communication method by ISO-15118.

The communication modem 103 may perform the communication exchange in consideration of noise information in a power line based on the signal attenuation information.

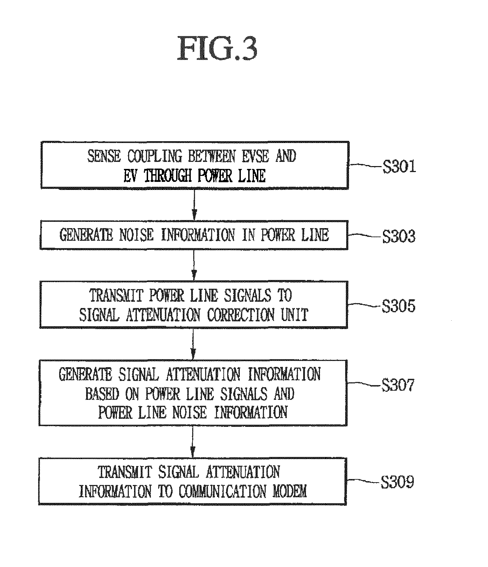

A power line communication method of the present disclosure is described below with reference to Fig. 3.

It is sensed that an EV and EVSE are coupled through a power line in step S301.

When the EV and the EVSE are coupled through the power line, the noise measurement unit 104 generates power line noise information that is information on noise in the power line and stores the power line noise information in a memory (not shown), in step S303.

A method of generating the power line noise information by the noise measurement unit 104 is as described above.

When after storing the noise information, a power line signal is transmitted from the communication modem 203 of the EVSE to the communication modem 103 and the signal measurement unit 102 of the EV, the signal measurement unit 102 transmits the received power line signal to the signal attenuation correction unit 101 in step S305.

When the power line signal is transmitted, the signal attenuation correction unit 101 obtains power line noise information from the memory and generates signal attenuation information on the power line based on the power line noise information and the power line signal, in step S307.

The signal attenuation correction unit 101 transmits the generated signal attenuation information to the communication modem 103, in step S309.

The communication modem 103 receives the signal attenuation information and reflects the signal attenuation information to perform a communication exchange with the communication modem 203 of the EVSE.

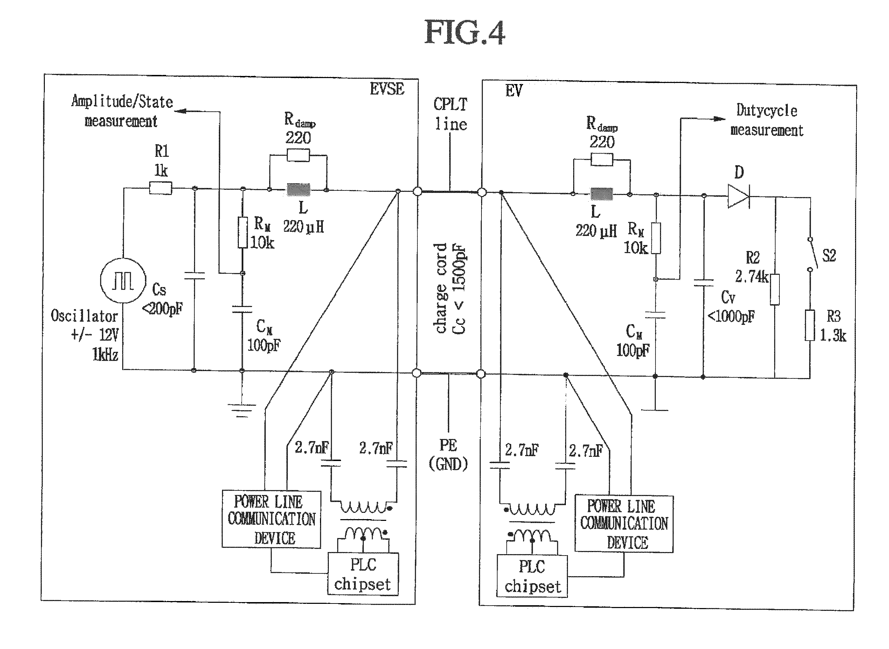

In the following, a method of performing a communication exchange by the power line communication devices 1 and 2 of the EV and the EVSE is described with reference to Fig. 4.

As shown in Fig. 4, the EV and the EVSE are connected by a power line CPLT line and a ground part PE(GND).

The EVSE may include an oscillator. The oscillator may generate e.g., an alternating current (AC) voltage signal (or power line signal) having a size of 12 V. Also, the oscillator may generate an AC voltage signal with e.g., a frequency of 1 kHz but the present disclosure is not limited thereto.

Resistor R1 (e.g., 1 kΩ□) may be connected to the upper end of the oscillator of the EVSE. The resistor R1 may be a path that transmits the AC voltage signal output from the oscillator toward where a power line is located.

A condenser Cs (e.g., 200 pF) may be connected to the right side of the resistor R1. The condenser Cs may perform an operation of rectifying the AC voltage signal.

A resistor RM (e.g., 10 kΩ□) and a condenser CM (e.g., 100 pF) connected to the lower end of the resistor RM may be connected to the upper and lower ends of the condenser Cs in series. A measurement unit for measuring the state or size of a transmitted, pre-rectified AC voltage signal may be located between the resistor RM and the condenser CM but the present disclosure is not limited thereto.

A resistor Rdamp (e.g., 220 Ω □) and an inductor L

(e.g., 220 µH) may be coupled to the upper end of the resistor RM in parallel but the present disclosure has no need to be limited thereto.

The resistor Rdamp and the inductor L may transmit the AC voltage signal output from the oscillator to the power line and the ground part.

The power line CPLT line may be connected to the other ends of the resistor RM and the inductor L.

The power line communication device 2 and a PLC chipset part may be connected to the EVSE sides of the power line and the ground part in parallel.

The PLC chipset part may include two condensers (e.g., 2.7 nF), a transformer between the two condensers that is connected thereto in series, and a PLC chipset.

When the PLC chipset transmits a first voltage signal to the EV side through the power line and the ground part through the transformer and the two condensers, the power line communication device 2 may generate power line noise information based on a second voltage signal output in response to the first voltage signal.

The power line communication device 1 and the PLC chipset part of the EV may be connected to the EV sides of the power line and the ground part.

Since the operations of the power line communication device 1 and the PLC chipset part of the EV are the same as those of the power line communication device 2 and the PLC chipset part of the EVSE, related descriptions are omitted.

The power line communication device 1 and the PLC chipset part of the EV are connected in parallel.

A part to which the resistor Rdamp (e.g., 220 Ω □) and the inductor L (e.g., 220 µH) are coupled in parallel may be connected to the upper right ends of the power line communication device 1 and the PLC chipset part of the EV.

The resistor Rdamp and the inductor L may function as a path transmitting the first voltage signal transmitted through the power line and the AC voltage signal transmitted from the oscillator but the present disclosure is not limited thereto.

An RM resistor (e.g., 10 kΩ □) and a condenser CM (e.g., 100 pF) may be connected to the right ends of the resistor Rdamp and the inductor L, and may perform an operation of rectifying the first voltage signal and the AC voltage signal transmitted from the EVSE.

A condenser Cv (e.g., a capacitance value equal to or smaller than 1000 pF) may be connected to the upper end of the resistor RM and the lower end of the condenser CM in parallel.

A diode D may be connected to the upper end of the condenser Cv.

A resistor R2 (e.g., 2.74 kΩ□) may be connected to the other end of the diode D.

A switch S2 and a resistor R3 (e.g., 1.3 kΩ□) may be connected to the upper and lower ends of the resistor R2 in series and coupled to the resistor R2 in parallel.

According to an embodiment, the above-described method may also be embodied as processor readable codes on a program-recorded medium. Examples of the processor readable medium are a ROM, a RAM, a CD-ROM, a magnetic tape, a floppy disk, and an optical data storage device, and the method is also implemented in the form of a carrier wave (such as data transmission through the Internet).

It is possible to estimate a channel according to the channel characteristics of a power line changed between the EV and the EVSE, apply corrected data to the power line and enhance the communication performance of the power line.

The above-described embodiments are not limited to the configuration and method as described, and some or all of the embodiments may also be selectively combined so that various variations may be implemented.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A power line communication device (1) of an electric vehicle (EV) coupled to electric vehicle service equipment (EVSE) through a power line, the power line communication device (1) comprising:
a noise measurement unit (104) for applying a first voltage signal to the EVSE through the power line, receiving a second voltage signal output from the EVSE in response to the first voltage signal, and generating noise information comprising information on a result of comparison between the second voltage signal and the first voltage signal;
a signal attenuation correction unit (101) for receiving a plurality of power line signals from the EVSE and generating signal attenuation information based on the generated noise information and the plurality of power line signals; and
a communication modem (103) for performing a communication exchange with the EVSE based on the generated signal attenuation information.

2. The power line communication device (1) according to claim 1, further comprising:
a memory unit for storing the generated noise information.

3. The power line communication device (1) according to claim 1 or 2, further comprising:
a signal measurement unit (102) for receiving the plurality of power line signals from the EVSE and transmitting the plurality of power line signals to the signal attenuation correction unit.

4. The power line communication device (1) according to any one of claims 1-3, wherein the noise information comprises information on an intensity of a third voltage signal that comprises the difference between the first voltage signal and the second voltage signal, and
the information on the intensity of the third voltage signal is in decibels (dB).

5. The power line communication device (1) according to any one of the preceding claims, wherein the signal attenuation correction unit (101) receives, from the EVSE, information on a plurality of first power line signals, the plurality of first power line signals being power line signals output from the EVSE, and generates the signal attenuation information based on information on the plurality of first power line signals, the generated noise information, and a plurality of second power line signals, the plurality of second power line signals being signals received after attenuation while the plurality of first power line signals are transmitted through the power line.

6. The power line communication device (1) according to claim 5, wherein the signal attenuation correction unit (101) generates information on the plurality of second power line signals, and generates the signal attenuation information based on information on the plurality of second power line signals, information on the plurality of first power line signals, and the noise information.

7. The power line communication device (1) according to claim 6, wherein the information on the plurality of first and second power line signals comprise information on signal intensities in the frequency domain of the first and second power line signals, and
the information on the signal intensity is in decibels (dB).

8. The power line communication device (1) according to any one of the preceding claims, wherein the signal attenuation information is a value that varies according to the channel state of the power line or the noise state of the power line.
